Europäisches Patentamt

European Patent Office

Office européen des brevets

(11) Publication number: **0 165 069 B1**

# EUROPEAN PATENT SPECIFICATION

(45) Date of publication of patent specification: **08.05.91**    (51) Int. Cl.⁵: **G01N 27/26**

(21) Application number: **85304260.4**

(22) Date of filing: **14.06.85**

(54) Medium for electrophoresis.

(30) Priority: **14.06.84 JP 122661/84**
         **14.06.84 JP 122662/84**

(43) Date of publication of application:
       **18.12.85 Bulletin 85/51**

(45) Publication of the grant of the patent:
       **08.05.91 Bulletin 91/19**

(84) Designated Contracting States:
       **DE GB**

(56) References cited:
       **EP-A- 0 116 404**
       **EP-A- 0 137 753**

(73) Proprietor: **FUJI PHOTO FILM CO., LTD.**
       **210 Nakanuma Minami Ashigara-shi**
       **Kanagawa 250-01(JP)**

(72) Inventor: **Ogawa, Masashi**
       **Fuji Photo Film Co. Limited 3-11-46, Senzui**
       **Asaka-shi Saitama(JP)**
       Inventor: **Nishio, Daijiro**
       **Fuji Photo Film Co. Limited 3-11-46, Senzui**
       **Asaka-shi Saitama(JP)**

(74) Representative: **Arthur, Bryan Edward et al**
       **Withers & Rogers 4 Dyer's Buildings Holborn**
       **London EC1N 2JT(GB)**

## Description

BACKGROUND OF THE INVENTION

### Field of the invention

This invention relates to a medium for electrophoresis, and more particularly relates to a medium for electrophoresis suitably employable for analysis of biopolymers such as proteins, as well as for determination of base sequence of DNA, RNA, their fragments, and their derivatives.

### Description of prior arts

For the analysis of biopolymers such as proteins, or for determination of base sequence of DNA or RNA, the electrophoresis can be carried out in the following manner.

A membrane medium for electrophoresis prepared by coating or casting a membrane-forming material such as agar, cellulose, cellulose acetate, starch, silica gel or polyacrylamide gel over a support such as a glass plate or a transparent plastic sheet (or film) is impregnated with a buffer solution; on the medium is applied a substance to be analyzed (sample); the applied sample is developed (or resolved) on or in the medium by applying a voltage between the both ends of the support, and then the developed substance is dyed thereon; and then the dyed sample is measured on the optical density to quantitatively determine the developed components of the sample.

Details of the electrophoresis and medium therefor are given in "Experimental Text for Electrophoresis (5th revision)" edited by Electrophoresis Society of Japan (Bunkodo, 1975), "Modern Electrophoresis" edited by Aoki & Nagai (Hirokawa Shoten, 1973), etc.

Recently, the electrophoresis has been frequently employed to analyze substances originating from a living body; for instance, the analyses of proteins originating from a living body are generally performed in the course of biochemical analysis for diagnosis. The determinations of base sequences of DNA or RNA are also performed in the course of the study in the genetic engineering technology.

As the membrane or sheet for electrophoresis, a filter paper was previously employed, but recently an agarose membrane or a polyacrylamide gel membrane (or medium) has been employed from the viewpoints of their advantageous properties. Particularly, the polyacrylamide gel membrane showing a molecular sieve function is widely employed recently. More particularly, in the method for determination of base sequence of DNA, RNA, their fragments, and their derivatives according to the post-label method, a procedure of slab electrophoresis using a polyacrylamide gel membrane has become essential.

The polyacrylamide gel membrane is prepared by crosslinking polymerization of a monomer such as acrylamide and a two-functional crosslinking agent such as N,N'- methylenebisacrylamide under an oxygen-free condition in the presence of water and a polymerization catalyst.

In the course of the preparation of the polyacrylamide gel membrane, a modifier such as an anionic surfactant, urea or formamide may be incorporated into the membrane. When only a small amount of the modifier is required for the preparation of the gel membrane for protein analysis, the modifier can be incorporated into the membrane by applying an aqueous modifier solution onto the wet gel membrane or immersing the gel membrane in an aqueous modifier solution.

Since the polymerization reaction for the preparation of polyacrylamide is a radical crosslinking polymerization as described above, the polymerization can be easily inhibited by the presence of oxygen. Therefore, the gel membrane should be prepared in the absence of oxygen. For this reason, a polyacrylamide gel membrane is generally prepared by a process involving: introducing an aqueous solution (gel-forming solution or gel solution) containing acrylamide, a crosslinking agent and a polymerization catalyst into a cell formed between two glass plates with a certain clearance (e.g., 0.3 - 1 mm); sealing the gel-forming solution from oxygen; and causing the crosslinking polymerization to prepare the desired gel membrane.

The polyacrylamide gel membrane prepared as above is employed for electrophoresis. For example, the electrophoresis for determination of base sequence of DNA is performed in the manner such as described below.

The polyacrylamide gel membrane is vertically placed in the form of being sandwiched between the glass plates, and in the first place a pre-electrophoresis procedure is carried out. Then, a certain amount of a sample (e.g., $^{32}$P-labeled DNA cleaved by Maxam-Gilbert method) is introduced into sample slots provided on the membrane, and electrophoresis is carried out. After the electrophoresis is carried out for a certain period of time (e.g., approx. 6 - 12 hours), one glass plate is removed carefully. Then, the exposed gel membrane is covered with a polymer film such as a poly(vinylidene chloride) film and subjected to the autoradiographic process. The autoradiographic process is carried out by the following procedures: A radiographic film and an intensifying screen are superposed in layers on the film covering the gel membrane, whereby exposing the radiographic film to the gel membrane at a low temperature (e.g., -80 °C) for a certain period of time (e.g., approx. 10 - 20 hours). After the exposing procedure, the radiographic film is developed, and the resolved pattern reproduced on the film is studied for determination of the base sequence of DNA, etc.

The above-described conventional polyacrylamide gel membrane is easily breakable, so that it is practically impossible to establish a system of preparing the polyacrylamide gel membrane in a mass scale and supplying technicians of electrophoresis with it in response to their requests. But recently, as more frequently the electrophoresis is employed to analyze substances originating from a living body, demand for polyacrylamide gel membrane has been sharply increased. Thus it is desired to establish the above-described mass-production system.

One of the available methods for preparing a polyacrylamide gel membrane in a mass scale comprises conveying a continuous plastic film at a constant rate, coating thereof a gel forming solution, and radically polymerizing the coated layer in an inert atmosphere (e.g., nitrogen) to form a cross-linked membrane. However in order to carry out the said method effectively, the rate of forming the gel from the said gel forming solution should be sufficiently high. But, the conventional crosslinking agent which has been used for preparing the polyacrylamide gel membrane hardly meet the above requirement.

## SUMMARY OF THE INVENTION

An object of the present invention is to provide a medium for electrophoresis which is suitably employable for analysis of biopolymers such as proteins or DNA.

Another object of the invention is to provide a medium for electrophoresis which can be prepared in a mass scale.

A further object of the invention is to provide a lightweight and tough medium for electrophoresis.

There is provided by the present invention a medium for electrophoresis which comprises an aqueous polyacrylamide gel formed by crosslinking polymerization of an acrylamide compound and a crosslinking agent having at least three reactive groups in the presence of water.

There is also provided by the present invention a medium for electrophoresis which comprises a plastic material support and a medium layer for electrophoresis superposed thereon, said layer comprising an aqueous polyacrylamide gel formed by crosslinking polymerization of an acrylamide compound and a crosslinking agent having at least three reactive groups in the presence of water.

Since the aqueous polyacrylamide gel forming solution for forming a medium for electrophoresis of the present invention, namely a gel forming solution which includes an acrylamide compound and a crosslinking agent having at least three reactive groups can be polymerized at remarkably high rate in the presence of water with crosslinking, it is suitably employable for industrial production of the medium. The medium for electrophoresis of the invention is advantageously prepared by a process for preparing the medium for electrophoresis which comprises conveying continuous plastic films at a constant rate, coating thereon a gel forming solution, and radically polymerizing the coated layer in an inert atmosphere (e.g., nitrogen).

Moreover the medium for electrophoresis of the present invention can be prepared in a mass scale, and it is a lightweight and tough. Accordingly, the medium for electrophoresis according to the invention can be handled, preserved, transported, etc. very easily. For this reason, the medium for electrophoresis of the invention is especially advantageous for the system of preparing a polyacrylamide gel membrane (the medium for electrophoresis) in a mass scale and supplying technicians of electrophoresis with it at their requests.

## DETAILED DESCRIPTION OF THE INVENTION

The medium for electrophoresis of the present invention can be prepared on a support, and is generally preserved, transported and handled on the support. However the support used in the preparation of the medium may be replaced with other material before the medium is preserved, transported or handled.

Examples of the support employable for the preparation of the medium for electrophoresis of the present invention include a variety of waterproof materials in the form of sheet (the term "sheet" includes a film and a plate), such as glass board, polymer coated paper, a plastic material. However, a plastic material sheet is advantageously employed for the medium for electrophoresis of the present invention.

Examples of the support of the plastic material sheet employable for the medium for electrophoresis include a variety of polymer materials in the form of sheet. Examples of the polymer materials include polyethylene terephthalate, polycarbonate of Bisphenol A, polyvinyl chloride, vinylidene chloride - vinyl chloride copolymer, polymethyl methacrylate, polyethylene, polypropylene, cellulose acetates, and cellulose acetate propionate. Preferred is a polyethylene terephthalate sheet.

The aqueous gel medium layer is now described in more detail.

The aqueous gel medium (may be referred to herein as "gel membrane") employed in the invention is a medium or a medium layer consisting essentially of an aqueous polyacrylamide gel formed by crosslinking polymerization of an acrylamide compound and a crosslinking agent having at least three reactive groups in the presence of water.

For the preparation of the polyacrylamide gel membrane, an acrylamide compound and a crosslinking agent are dissolved or dispersed in water to prepare an aqueous solution or an aqueous dispersion, in which the crosslinking reaction is carried out to form an aqueous polyacrylamide gel membrane. Hereinafter, the term "dissolving (in water)" means to include both "dissolving (in water)" and "dispersing (in water)", and the term "aqueous solution" means to include both "aqueous solution" and "aqueous dispersion", unless otherwise indicated. The term "aqueous medium" is used to include both a simple water as well as an aqueous mixture of water and an organic solvent, the organic solvent being optionally added.

Examples of the acrylamide compound employable in the present invention include acrylamide and its homologues such as N-methylacrylamide, N,N-dimethylacrylamide, N-(hydroxymethyl)acrylamide and diacetonacrylamide, as well as methacrylamide and its homologues. These compounds can be employed independently or in combination. Acrylamide is most preferred among these acrylamide compounds, and said acrylamide can be also preferably employed in combination with one or more of other acrylamide compounds.

The crosslinking agent of the invention is a compound having at least three reactive groups. Examples of the crosslinking agent having at least three reactive groups employable for obtaining the polyacrylamide gel membrane in the invention include trifunctional compounds such as triallylcyanurate, triallylisocyanurate, 1,3,5-triacryloylhexahydro-s-triazine. Known bifunctional crosslinking agents as described, for instance, in "Electrophoresis" 1981, 2, 213-228 can be employed in combination with the above-mentioned trifunctional crosslinking agent.

The crosslinking agent can be employed in an amount of approx. 1 to 30 wt.%, preferably approx. 3 to 10 wt.%, based on the total weight of the monomer (i.e., acrylamide compound) and the crosslinking agent. The gel concentration is in the range of approx. 3 to 30 wt/v % (total weight of monomer and crosslinking agent per total volume of gel membrane comprising monomer, crosslinking agent and aqueous medium), the concentration being expressed in accordance with the definition indicated by S. Hjerten in Arch. Biochem. Biophys. 1 (Suppl.), 147 (1962).

The medium for electrophoresis of the invention can be employed for analysis of proteins and conjugated proteins (e.g., lipoproteins, glycoproteins, etc.) and the medium (gel membrane) of the element may comprise an anionic surfactant as a modifier. The use of the anionic surfactant is generally essential or preferable for the electrophoretic analyses of proteins or conjugated proteins, because it favorably contributes to perform separation of the protein and conjugated protein and determinationof molecular weight of these proteins. However, the medium for electrophoresis may not contain the anionic surfactant.

Examples of the anionic surfactant include alkylsulfates, particularly alkylsulfates having a long chain alkyl group of at least 10 carbon atoms. The cation contained for formation of the salt generally is an alkali metal ion such as sodium ion, potassium ion, or lithium ion. Sodium ion is preferred from the economical viewpoint. The alkylsulfates preferably are dodecylsulfates (salts of sodium, potassium, lithium, etc.), and particularly preferred is sodium dodecylsulfate (SDS). The introduction of SDS into the gel membrane is particularly advantageous for separation of proteins and conjugated proteins, as well as for determination of molecular weight thereof. The anionic surfactant (modifier) can be contained in the gel-forming solution in an amount of approx. 0.05 to 2.0 wt/v % (weight per volume of the gel forming solution), preferably approx. 0.1 to 1.5 wt/v %.

The medium for electrophoresis of the invention also can be employed for determination of base sequence of DNA, RNA, their fragments, and their derivatives. For this purpose, a compound containing at least one carbamoyl group is generally incorporated into the electrophoresis medium as a modifier. Examples of the modifier include urea and formamide. Urea is most preferred. The modifier can be used in

EP 0 165 069 B1

an amounts of approx. 40 to 60 wt.% based on the volume of the aqueous gel containing the monomer and crosslinking agent. In the case that urea is used as the modifier, the amount generally ranges from approx. 6 moles (approx. 360 g.) per one liter of the aqueous gel containing the monomer and crosslinking agent to the saturation amount, preferably from approx. 7 moles (approx. 420 g.) to the saturation amount.

The gel membrane of the invention may contain an oxidation inhibitor. The oxidation inhibitor can be chosen from various compounds heretofore known as oxidation inhibitors employable for the gel membrane for electrophoresis. Examples of the oxidation inhibitor include 1,4-dithiothreitol and 2-mercaptoethanol.

The gel membrane of the invention may contain a water-soluble polymer. As the water-soluble polymer, a water-soluble polymer of the addition polymerization type or condensation polymerization type can be used. Examples of the polymer of the addition polymerization type include non-ionic water-soluble polymers such as polyvinyl alcohol, polyvinyl pyrrolidone, and polyacrylamide. Examples of polymer of the condensation polymerization type include non-ionic water-soluble polyalkylene glycols such as polyethylene glycol and polypropylene glycol. The water-soluble polymer of molecular weight ranging from approx. 10,000 to 1,000,000 is preferably used. Among these water-soluble polymers, polyacrylamide and polyethylene glycol are preferable. The water-soluble polymer is used in the range of approx. 2 to 100 wt.%, preferably, approx, 5 to 50 wt.%, based on the total weight of the monomer and crosslinking agent.

The addition of a water-soluble polymer serves to impart elasticity to the gel membrane, and thus modified gel membrane is still elastic even even if it is dried. Thus, the gel membrane is so improved as to be free from brittleness, whereby the gel membrane becomes hardly breakable. Further, the viscosity of the gel membrane can be controlled by selecting the molecular weight and amount of the water-soluble polymer.

The gel membrane preferably contains agarose. There is no specific limitation on the agarose to be contained in the gel membrane, and any type of agarose such as low-electroendosmosis agarose, medium-electroendosmosis agarose, or high-electroendosmosis agarose can be used. Examples of agarose employable in the invention include agaroses disclosed in Japanese Patent Provisional Publication Nos. 55(1980)-5730, 55(1980)-110946 (corresponding to USP 4,290,911 and GB 2 042 571A), 57(1982)-502098 (WO 82/02599, USP 4,319,976), etc. The amount of agarose to be added ranges from approx. 0.2 to 2 wt/v %, preferably from approx. 0.3 to 1.2 wt/v %, based on the volume of the aqueous gel containing the monomer and crosslinking agent. It becomes possible by the addition of agarose that the viscosity of the gel forming solution can be controlled through changing the temperature of the solution, whereby suppressing flowability of the solution as well as facilitating the formation of the gel membrane.

A pH buffer agent can be contained in the gel membrane of the invention.

In the medium for elctrophoresis of protein and protein derivatives, a buffer agent which is able to buffer a solution to a range of pH 2.5 to 10.0 can be incorporated. Such buffer agent are described in publications such as "Chemistry Handbook, Fundamental Edition" compiled by The Chemical Society of Japan (Maruzen Ltd., Tokyo, 1966) pages 1312 - 1320; "Modern Electrophoresis" edited by Aoki & Nagai (Hirokawa Shoten, 1973), pages 320 - 322; "Data for Biochemical Research" compiled by R.M.C. Dawson et al., second edition (Oxford at the Clarendon Press, 1969) pages 476 - 508; "Biochemistry" 5, 467 (1966); and "Analytical Biochemistry" 104, pages 300 - 310 (1966). Examples of the buffer agent include a buffer agent containing barbital, a buffer agent containing tris(hydroxymethyl)aminomethane (Tris), a buffer agent containing phosphate, a buffer agent containing borate, a buffer agent containing acetic acid or acetate, a buffer agent containing citric acid or citrate, a buffer agent containing lactic acid or lactate, and a buffer agent containing glycine; as well as N,N-bis(2-hydroxyethyl)glycine (Bicine), N-2-hydroxyethylpiperazine-N'-2-hydroxypropane-3-sulfonic acid (HEPPSO) or its salt, N-2-hydroxyethylpiperazine-N'-3-propanesulfonic acid (EPPS) or its salt, N-[tris-(hydroxymethyl)methyl]-3-aminopropanesulfonic acid (TAPS) or its salt. Preferable examples of the buffer agent include potassium dihydrogenphosphate-disodium hydrogenphosphate, Tris-sodium borate, Tris-sodium borate-EDTA·2Na, Tris-citric acid, sodium barbital-sodium acetate, sodium barbital-hydrochloric acid, barbital-sodium barbital, acetic acid-sodium acetate, lactic acid-sodium lactate, citric acid-disodium hydrogenphosphate, Bicine, HEPPSO, sodium salt of HEPPSO, EPPS, sodium salt of EPPS, TAPS, sodium salt of TAPS, etc.

In the medium for electrophoresis of DNA and the like, a buffer agent which is able to buffer a solution to a range of pH 8.0 to 9.0, preferably pH 8.2 to 8.3 can be incorporated. Such buffer agents are described in the aforementioned publications.

Examples of the buffer agent include tris(hydroxymethyl)aminomethane (Tris), N,N-bis(2-hydroxyethyl)-glycine (Bicine), N-2-hydroxyethylpiperazine-N'-2-hydroxypropane-2-sulfonic acid or its Na or K salt, N-2-hydroxyethylpiperazine-N'-2-hydroxypropane-3-sulfonic acid (HEPPSO) or its Na or K salt, N-[tris-(hydroxymethyl)methyl]-3-aminopropanesulfonic acid (TAPS) or its Na or K salt; as well as an acid, an alkali, and a salt employable in combination with the compounds. Preferable examples of the buffer agent

5

include Tris, boric acid-EDTA•2Na (pH 8.3).

The gel membrane of the invention is formed by radical crosslinking polymerization between the monomer such as acrylamide with the trifunctional compound (i.e., crosslinking agent) in an aqueous medium in which the water-soluble polymer and agarose preferably are dissolved almost homogeneously. Thus obtained gel is assumed to have a structure in which the water-soluble polymer and agarose are dispersed in the three dimensional crosslinked polymer formed by the reaction of the monomer and crosslinking agent, and the water-soluble polymer and agarose dispersed and entangle with the three dimensionally crosslinked polymer structure.

The crosslinking polymerization can be initiated by a known method, for instance, in the presence of a peroxide and/or under irradiation of ultraviolet rays. The reaction can be further accelerated by heat and irradiation with ultraviolet rays.

As the polymerization catalyst, a known low temperature-polymerization initiator such as those described in "Electrophoresis" 1981, 2, 213 - 219, ibid. 1981, 2, 220 -228; and "Modern Electrophoresis" edited by Aoki & Nagai (Hirokawa Shoten, 1973) can be used. Examples of the initiator include a mixture of β-dimethylaminopropionitrile (DMAP) and ammonium peroxodisulfate, a mixture of N,N,N',N'-tetramethylethylenediamine (TEMED) and ammonium peroxodisulfate, a mixture of TEMED and riboflavin, a combination of a mixture of TEMED, riboflavin and hydrogen peroxide, and irradiation with ultraviolet rays. The radical reaction initiator can be employed in the amount of approx. 0.3 to 5 wt. %, preferably approx. 0.5 to 3 wt. %, based on the total amount of the monomer and crosslinking agent.

A polyol compound such as glycerol or ethylene glycol can be contained in the aqueous gel membrane of the invention as a wetting agent. The polyol compound can be introduced in an amount of approx. 5 to 40 wt.% based on the volume of the aqueous gel membrane. Glycerol is particularly preferable among the polyol compounds. The addition of the wetting agent serves to keep the gel membrane from excessive dryness possibly caused by evaporation of water during storage of the medium, whereby preventing the medium from turning brittle or cracking caused by the excessive dryness. Thus, the improvement of physical properties of the gel membrane is accomplished.

The gel membrane of the element of the invention can be prepared by a process in which a gel forming solution is coated by a known method on an electric insulation support having the adhesive layer containing a cellulose derivative thereon. The gel forming solution is then crosslinked to polymerization on the surface of the support.

In the case the gel forming solution is crosslinked on the surface of the support, the surface of the gel forming solution layer can be covered with a covering material such as a film, sheet, or plate. The same material as employable for the support can be employed as the covering material. The covering materials may be previously so treated by glow discharge treatment to have a hydrophilic surface. The covering material has thickness of not more than 300 μm, and preferably has approx. 4 to 200 μn, from the practical viewpoint.

In the case that the covering material is thick (e.g., approx. 70 to 300 μn), the element of the present invention can be prepared by the following steps: the gel forming solution is first coated on the covering material and crosslinked thereon to form the desired gel medium layer, and then a support having the metal oxide layer thereon is provided on the gel medium layer.

The gel membrane of the invention can be employed for the horizontal or vertical electrophoresis, disc electrophoresis, etc. by known methods described, for instance, in the aforementioned texts.

The present invention will be more clearly understood with reference to the following examples.

EXAMPLE 1

A surface of a colorless transparent polyethylene terephthalate sheet (thickness 180 μm) was made hydrophilic by irradiation of ultraviolet rays. On the surface of the sheet (support) was coated a gel forming solution containing the components set forth in Table 1 together with 66 mg. of ammonium peroxodisulfate, 33 μℓ of TEMED and 1 mg. of riboflavin phosphoric ester to have a thickness of approx. 500 μm. The coated layer was irradiated with ultraviolet rays in a nitrogen atmosphere to form the gel of the medium layer for electrophoresis. After coating the solution, a period of time until the formation of gel was measured at 25°C to determine the gel forming rate.

6

## Table 1

### (Composition of Gel Forming Solution for Medium Layer)

| Sample No. | 1 (Comparison) | 2 (The Invention) |
|---|---|---|
| Acrylamide | 9.5 g. | 9.5 g. |
| BIS | 0.54 g. | - |
| TAHT | - | 0.54 g. |
| Disodium hydrogenphosphate 12 hydrates | 3.58 g. | 3.58 g. |
| Sodium dihydrogenphosphate 2 hydrates | 0.33 g. | 0.33 g. |
| SDS | 0.10 g. | 0.10 g. |
| Addition of water to | 100 ml | 100 ml |

In Table 1, BIS represents N,N'-methylenebis acrylamide (bifunctional crosslinking agent); TAHT represents 1,3,5-triacryloylhexahydro-s-triazine (trifunctional crosslinking agent); and SDS represents sodium dodecylsulfate.

As a result of measuring the gel forming rate of each sample, it was observed that while the comparative polyacrylamide gel membrane (Sample No. 1, conventionally employed gel membrane) needed 17 minutes for gel formation, the polyacrylamide gel membrane according to the invention (Sample No. 2) needed 5 minutes for the gel formation.

A control (standard) protein was electrophoresed on the mediums for electrophoresis (the samples No. 1 and No. 2). The mediums were then immersed in an aqueous Coomasie Blue R-250 (Colour Index Constitution Number 42660) solution (0.1 %) for dyeing. As a result of examining the resolving property for the protein of each sample, it was observed that the polyacrylamide gel membrane according to this invention (Sample No. 2) showed the same property as the comparative polyacrylamide gel membrane (Sample No. 1) which had been accepted in practical uses.

EXAMPLE 2

On the surface of the sheet (support) was coated a gel forming solution containing the components set forth in Table 2 in the same manner as in Example 1.

## Table 2

### (Composition of Gel Forming Solution for Medium Layer)

| Sample No. | 3 (Comparison) | 4 (The Invention) |
|---|---|---|
| Acrylamide | 7.6 g. | 7.6 g. |
| BIS | 0.43 g. | - |
| TAHT | - | 0.43 g. |
| Tris(hydroxymethyl) aminomethane | 1.08 g. | 1.08 g. |
| Boric acid | 0.55 g. | 0.55 g. |
| EDTA·2Na salt | 0.75 g. | 0.75 g. |
| Addition of water to | 100 m$l$ | 100 m$l$ |

In Table 2, BIS and TAHT represent the same meanings as in Table 1.

As a result of measuring the gel forming rate of each sample, it was recognized that while the comparative polyacrylamide gel membrane (Sample No. 3, conventionally employed gel membrane) needed 16 minutes for gel formation, the polyacrylamide gel membrane according to the invention (Sample No. 4) needed 6 minutes for the gel formation.

A DNA treated by a restriction enzyme was electrophoresed on the mediums for electrophoresis (Samples No. 3 and No. 4). As a result of examining the resolving property for the DNA, it was observed that the polyacrylamide gel membrane according to the invention (Sample No. 4) showed the same property as the comparative polyacrylamide gel membrane (Sample No. 3) which had been accepted in practical uses.

### EXAMPLE 3

On the surface of the sheet (support) was coated a gel forming solution containing the components set forth in Table 3 in the same manner as in Example 1.

## Table 3
### (Composition of Gel Forming Solution for Medium Layer)

| | (Comparison) | | (The Invention) | |
|---|---|---|---|---|
| Sample No. | 5 | 6 | 7 | 8 |
| Acrylamide | 14.25 g. | 7.60 g. | 11.87 g. | 7.60 g. |
| BIS | 0.75 g. | 0.40 g. | – | – |
| TAHT | – | – | 0.81 g. | 0.43 g. |
| Urea | 42.0 g. | 42.0 g. | 42.0 g. | 42.0 g. |
| Tris(hydroxymethyl) aminomethane | 1.08 g. | 1.08 g. | 1.08 g. | 1.08 g. |
| Boric acid | 0.55 g. | 0.55 g. | 0.55 g. | 0.55 g. |
| EDTA·2Na salt | 0.75 g. | 0.75 g. | 0.75 g. | 0.75 g. |
| Addition of water to | 100 ml | 100 ml | 100 ml | 100 ml |

In Table 3, BIS and TAHT represent the same meanings as in Table 1.
The measured gel forming periods on the samples are set forth in Table 4.

## Table 4 (Gel Forming Period)

| Sample No. | Gel Forming Period (minute) | |
|---|---|---|
| 5 | 14.5 | (Comparison Sample) |
| 6 | 15.5 | (Comparison Sample) |
| 7 | 6.0 | (The Invention) |
| 8 | 6.5 | (The Invention) |

As a result shown in Table 4, it was recognized that the polyacrylamide gel membranes according to this invention (Samples No. 7 and 8) needed shorter time for gel formation as compared with the comparative polyacrylamide gel membranes (Samples No. 5 and 6).

The cutting of the end of the gel membrane for the formation of a sample inlet was done smoothly and gave a square inlet.

At each end of the above polyacrylamide gel membranes, a sample inlet was formed. Then, each surface of the gel membranes was covered with PET film (100 $\mu$m) to obtain a medium for electrophoresis comprising a gel membrane sandwiched between two PET films. DNA sample cleaved by Maxam-Gilbert method was electrophoresed on the polyacrylamide gel membrane and treated with the autoradiographic process for sequencing the DNA.

As a result of examining the resolving property for the DNA of each sample, it was recognized that the polyacrylamide gel membranes according to this invention Đ(Samples No. 7 and 8) showed the same property as the comparative polyacrylamide gel membranes (Samples No. 5 and 6) which have been conventionally used.

## Claims

1. A medium for electrophoresis comprising an aqueous polyacrylamide gel at a gel concentration in the range of 3 to 30 wt/v %, which is formed by cross-linking polymerization of an acrylamide compound and a cross-linking agent in an amount of 1 to 30 wt.% per the amount of the acrylamide compound, said cross-linking agent having at least three reactive groups in the presence of water.

2. A medium or electrophoresis according to claim 1, containing a water-soluble polymer and agarose.

3. A medium for electrophoresis according to claim 1 or 2, containing an anionic surfactant.

4. A medium for electrophoresis according to claim 3, in which the anionic surfactant is an alkylsulfate.

5. A medium for electrophoresis according to claim 4, in which the alkylsulfate is sodium dodecylsulfate.

6. A medium for electrophoresis according to claim 1 or 2, containing a compound having at least one carbamoyl group.

7. A medium for electrophoresis according to claim 6, in which said compound having at least one carbamoyl group is urea or formamide.

8. A medium for electrophoresis according to any of the preceding claims, which is supported by a sheet of plastic material.

## Revendications

1. Milieu d'électrophorèse comprenant un gel aqueux de polyacrylamide, à une concentration de gel de l'ordre de 3 à 30% en poids/volume, qui est formé par polymérisation par réticulation d'un composé acrylamide et d'un agent de réticulation à raison de 1 à 30% en poids, par quantité de composé acrylamide, cet agent de réticulation ayant au moins trois groupes réactifs en présence d'eau.

2. Milieu d'électrophorèse selon la revendication 1, contenant un polymère soluble dans l'eau et de l'agarose.

3. Milieu d'électrophorèse selon la revendication 1 ou 2, contenant un agent surfactif anionique.

4. Milieu d'électrophorèse selon la revendication 3, dans lequel l'agent surfactif anionique est un sulfate d'alkyle.

5. Milieu d'électrophorèse selon la revendication 4, dans lequel le sulfate d'alkyle est dodécyl-sulfate de sodium.

6. Milieu d'électrophorèse selon la revendication 1 ou 2, contenant un composé possédant au moins un groupe carbamoyle.

7. Milieu d'électrophorèse selon la revendication 6, dans lequel ce composé possédant au moins un groupe carbamoyle est une urée ou un formamide.

8. Milieu d'électrophorèse selon l'une quelconque des revendications précédentes, qui est supporté par une feuille de matière plastique.

**Ansprüche**

1. Ein Medium fuer die Elektrophorese, das ein waessriges Polyacrylamidgel mit einem Gelanteil im Bereich von 3 bis 30 Gewichstsprozent, das durch Verknuepfungspolymerisation einer Acrylamidverbindung und einem Verknuepfungsmittel in einem Mengenanteil von 1 bis 30 Gewichtsprozent pro Mengenanteil der Acrylamidverbindung, aufweist, wobei das genannte Verknuepfungsmittel mindestens drei reaktionsfreudige Gruppen in der Gegenwart von Wasser aufweist.

2. Ein Medium fuer die Elektrophorese nach Anspruch 1, das ein wasserloesliches Polymer und Agarose enthaelt.

3. Ein Medium fuer die Elektrophorese nach Anspruch 1 oder 2, das eine anionische oberflaechenaktive Substanz enthaelt.

4. Ein Medium fuer die Elektrophorese nach Anspruch 3, wobei die anionische oberflaechenaktive Substanz ein Alkylsulfat ist.

5. Ein Medium fuer die Elektrophorese nach Anspruch 4, wobei das Alkylsulfat Natriumdodekylsulfat ist.

6. Ein Medium fuer die Elektrophorese nach Anspruch 1 oder 2, das eine mindestens eine Carbamoylgruppe aufweisende Verbindung enthaelt.

7. Ein Medium fuer die Elektrophorese nach Anspruch 6, wobei die genannte mindestens eine Carbamoylgruppe aufweisende Verbindung Harnstoff oder Formamid ist.

8. Ein Medium fuer die Elektrophorese nach einem der vorhergehenden Ansprueche, welches von einer Folie aus Plastik gestuetzt wird.